# EUROPÄISCHE PATENTSCHRIFT

(11) **EP 4 363 242 B1**
(45) Veröffentlichungstag und Bekanntmachung des Hinweises auf die Patenterteilung: **17.09.2025**
(21) Anmeldenummer: 21827186.4
(22) Anmeldetag: 29.11.2021
(51) Int. Cl.: B60C 11/03, B60C 11/13

(54) **FAHRZEUGLUFTREIFEN**
PNEUMATIC VEHICLE TYRE
PNEUMATIQUE DE VÉHICULE

(30) Priorität: 29.06.2021 DE 102021206704
(43) Veröffentlichungstag der Anmeldung: 08.05.2024
(73) Patentinhaber: Continental Reifen Deutschland GmbH, 30175 Hannover (DE)
(72) Erfinder: ÖZÜDURU, Ahmet, 30165 Hannover (DE); SOYYUECE, Atakan, 30165 Hannover (DE); PAGAC, Lubomir, 30165 Hannover (DE)
(74) Vertreter: Continental Corporation
(86) Internationale Anmeldenummer: PCT/DE2021/200215
(87) Internationale Veröffentlichungsnummer: WO 2023/274435

(56) Entgegenhaltungen:
- EP-A2- 2 436 535
- EP-B1- 3 421 264
- RU-C2- 2 667 444
- US-A1- 2003 024 621
- US-A1- 2012 080 130

## Beschreibung

Die Erfindung betrifft einen Fahrzeugluftreifen mit einem laufrichtungsgebunden gestalteten Laufstreifen mit zumindest einer Profilblockreihe mit durch Querrillen voneinander getrennten Profilblöcken, welche an den angrenzenden Querrillen jeweils eine beim Abrollen des Reifens bei Vorwärtsfahrt zuerst in den Untergrund eintretende einlaufende Blockkante und eine auslaufende Blockkante aufweisen, wobei jede Querrille von den Blockkanten ausgehende Rillenflanken und einen Rillengrund aufweist und wobei Querrillen vorgesehen sind, in welchen jeweils zumindest eine bis zu beiden Rillenflanken reichende Grundanhebung ausgebildet ist, welche in radialer Richtung durch eine im Querschnitt der Querrille relativ zur Laufstreifenperipherie unter einem spitzen Winkel geneigte Deckfläche begrenzt ist.

Ein derartiger Fahrzeugluftreifen ist beispielsweise aus der EP 2 436 535 A2 bekannt. Der Reifen weist einen laufrichtungsgebundenen Laufstreifen mit einer zentralen Profilrippe, zwei mittleren Profilblockreihen und zwei schulterseitigen Profilblockreihen auf. Die mittleren Profilblockreihen und die schulterseitigen Profilblockreihen sind von Umfangsrillen begrenzt und weisen jeweils Profilblöcke auf, die durch in die Umfangsrillen einmündende, über die Laufstreifenbreite insgesamt V-förmig verlaufende Querrillen voneinander getrennt sind und jeweils eine einlaufende Blockkante und eine auslaufende Blockkante aufweisen. Am Rillengrund der Querrillen der mittleren Profilblockreihen ist mittig jeweils eine bis zu den Rillenflanken reichende Grundanhebung mit einer Deckfläche ausgebildet, welche im Querschnitt der Querrille relativ zur Laufstreifenperipherie derart unter einem konstanten Winkel geneigt ist, dass die Tiefe der Querrille im Bereich der Deckfläche von der von der auslaufenden Blockkante ausgehenden Rillenflanke zur der von der einlaufenden Blockkante ausgehenden Rillenflanke kontinuierlich zunimmt. Die getroffenen Maßnahmen sollen für die Kraftübertragung auf den Untergrund von Vorteil sein.

Aus der US 2003/0024621 A1 ist ein Fahrzeugluftreifen mit einem bezüglich der Reifenäquatorialebene asymmetrischen Laufstreifen mit ersten und zweiten Profilrippen bekannt, welche durch Umfangsrillen voneinander getrennt und jeweils durch Querrillen in Profilblöcke strukturiert sind, wobei die eine Laufstreifenhälfte zur anderen Laufstreifenhälfte, in Draufsicht betrachtet, um 180° verdreht ausgeführt ist. In den Querrillen ist je eine bis zu beiden Rillenflanken reichende Grundanhebung ausgebildet, welche in radialer Richtung durch eine im Querschnitt der Querrille relativ zur Laufstreifenperipherie unter einem Winkel geneigte Deckfläche begrenzt ist. Die Deckflächen der Grundanhebungen, welche sich in innerhalb der ersten Profilrippen verlaufenden Querrillen befinden, sind dabei gegensinnig zu den Deckflächen der Grundanhebungen, welche sich in innerhalb der zweiten Profilrippen verlaufenden Querrillen befinden, geneigt.

Die RU 2 667 444 C2 offenbart einen Fahrzeugluftreifen mit einem laufrichtungsgebunden ausgeführten Laufstreifen, welcher mit über die Laufstreifenbreite V-förmig zueinander sowie jeweils durchgehend gebogen verlaufenden, im Bereich der Reifenäquatorialebene ineinander einmündenden Schrägrillen versehen ist, wobei die Schrägrillen langgezogene Profilklotzstrukturen voneinander trennen. Die Profilklotzstrukturen sind im Bereich der Reifenäquatorialebene durch in den Schrägrillen ausgebildeten, gegenüber der Laufstreifenperipherie in radialer Richtung abgesetzten Grundanhebungen mit jeweils einer relativ zur Laufstreifenperipherie geneigten Deckfläche verbunden. Der Reifen soll gute Griffeigenschaften auf nasser und auf mit Schnee bedeckter Fahrbahn aufweisen.

Aus der EP 3 421 264 B1 ist ein Fahrzeugluftreifen mit einem laufrichtungsgebunden ausgeführten Laufstreifen mit über die Laufstreifenbreite V-förmig zueinander verlaufenden Schrägrillen bekannt, wobei in jeder Laufstreifenhälfte zwischen in Umfangsrichtung benachbarten Schrägrillen zumindest zwei in Draufsicht gegensinnig zu den Schrägrillen geneigte Nuten verlaufen. Zu den Nuten gehören solche, an deren Nutflanken zumindest jeweils ein keilförmiger Vorsprung ausgebildet ist, wobei die Vorsprünge, in Erstreckungsrichtung der Nut betrachtet, überlappen, sodass ein sich zwischen den Vorsprüngen erstreckender Nutgrundpfad mit einer Breite von 0,5 mm bis 1,5 mm und einer Tiefe von mindestens 0,5 mm und höchstens 60% der Profiltiefe verbleibt. Der Fahrzeugluftreifen weist guter Winterfahreigenschaften und ein gutes Wasserdrainagevermögen auf.

In Querrillen von Laufstreifen ausgebildete Grundanhebungen (sogenannte "Tiebars") stützen die Profilblöcke unter Belastung gegeneinander ab und tragen somit dazu bei, die Steifigkeit des Laufstreifenprofils und daher auch die Steifigkeit von Blockkantenbereichen zu erhöhen, wodurch die Bremseigenschaften vorteilhaft beeinflusst werden. Da die Grundanhebungen den Rillenquerschnitt lokal verringern, sind stets deren Auswirkungen auf die Entwässerungsleistung (Wasseraufnahmekapazität) der Querrillen zu beachten.

Der Erfindung liegt die Aufgabe zu Grunde, bei einem Fahrzeugluftreifen der eingangs genannten Art unter Aufrechterhaltung eines guten Entwässerungsverhaltens die Bremseigenschaften weiter zu verbessern.

Gelöst wird die gestellte Aufgabe erfindungsgemäß dadurch, dass die Deckfläche der Grundanhebung derart relativ zur Laufstreifenperipherie geneigt ist, dass die Querrille im Bereich der Deckfläche eine von der von der einlaufenden Blockkante ausgehenden Rillenflanke zur der von der auslaufenden Blockkante ausgehenden Rillenflanke kontinuierlich zunehmende, in radialer Richtung ermittelte Tiefe aufweist.

Die erfindungsgemäß ausgeführte Grundanhebung stützt die von der einlaufenden Blockkante ausgehende Rillenflanke stärker ab als die von der auslaufenden Blockkante ausgehende Rillenflanke. Es wird daher primär die einlaufende Blockkante bzw. der dortige Blockkantenbereich versteift, sodass der beim Bremsen am stärksten beanspruchte Blockbereich wirkungsvoll versteift wird und in diesem Bereich die Blockdeformation geringgehalten wird, was die Bremseigenschaften verbessert. Durch die Neigung der Deckfläche und das damit verbundene geringe Gummivolumen der Grundanhebung ist weiterhin ein gutes Entwässerungsverhalten gegeben.

Gemäß einer bevorzugten Ausführung weist die Deckfläche die Form eines Trapezes mit einer längeren Grundseite, welche der von der einlaufenden Blockkante ausgehenden Rillenflanke zugewandt ist, und einer kürzeren Grundseite, welche der von der auslaufenden Blockkante ausgehenden Rillenflanke zugewandt ist, auf. Bei dieser Ausführung nimmt die Tiefe der Querrille im Bereich der Deckfläche daher von der längeren Grundseite des Trapezes zur kürzeren Grundseite des Trapezes kontinuierlich zu, wodurch sich die versteifende Wirkung der Grundanhebung stärker auf den gewünschten Bereich, nämlich den Bereich der einlaufenden Blockkante, konzentriert. Insbesondere bleibt bei dieser Ausführung eine besonders ausgeprägte Öffnungsfähigkeit der Querrille bei Bodenkontakt erhalten, sodass die Auswirkungen der Grundanhebung auf die Entwässerungsleistung der Querrille im Wesentlichen vernachlässigbar sind.

Bei einer bevorzugten Variante der genannten bevorzugten Ausführung weisen die längere Grundseite und die kürzere Grundseite jeweils eine in die axiale Richtung projizierte Länge auf, wobei die in die axiale Richtung projizierte Länge der kürzeren Grundseite 40% bis 75%, insbesondere 45% bis 65%, besonders bevorzugt 50% bis 55%, der in die axiale Richtung projizierten Länge der längeren Grundseite beträgt. Auch diese Maßnahme trägt dazu bei, die versteifende Wirkung der Grundanhebung stärker auf den Bereich der einlaufende Blockkante zu konzentrieren und das Gummivolumen der Grundanhebung weiter zu reduzieren.

Bei der letztgenannten Variante ist es von Vorteil, wenn die in die axiale Richtung projizierte Länge der längeren Grundseite 15% bis 35%, insbesondere 20% bis 30%, der an der Laufstreifenperipherie ermittelten, in die axiale Richtung projizierten Länge der Querrille beträgt. Dies trägt zu einer vorteilhaften Balance zwischen dem Entwässerungsverhalten und den Bremseigenschaften bei.

Bevorzugter Weise weist die Deckfläche der Grundanhebung die Form eines gleichschenkeligen Trapezes auf, wodurch eine besonders gleichmäßige Versteifung im Bereich der einlaufenden Blockkante erzielt wird.

Für eine gleichmäßige Versteifung im Bereich der einlaufenden Blockkante ist es von Vorteil, wenn die Grundanhebung eine in radialer Richtung verlaufende Symmetrieebene aufweist.

Eine weitere bevorzugte Ausführung, bei welcher die Deckfläche - wie oben erwähnt - die Form eines Trapezes aufweist und die Grundanhebung die erwähnte Symmetrieebene besitzt, ist dadurch gekennzeichnet, dass die Deckfläche zwei zwischen der längeren Grundseite des Trapezes und der kürzeren Grundseite des Trapezes verlaufende Trapezschenkel aufweist, welche in Draufsicht relativ zur Symmetrieebene der Grundanhebung unter einem Winkel von 10° bis 30°, insbesondere von 15° bis 25°, verlaufen.

Gemäß einer weitere bevorzugten Ausführung weist die Tiefe der Querrille im Bereich der Deckfläche der Grundanhebung einen kleinsten Wert von 35% bis 55%, insbesondere von 40% bis 50%, der in radialer Richtung ermittelten maximalen Tiefe der Querrille auf. Dies ist vor allem für das Entwässerungsverhalten der Querrille vorteilhaft.

Bei der letztgenannten Ausführung ist es von Vorteil, wenn die Tiefe der Querrille im Bereich der Deckfläche der Grundanhebung einen größten Wert aufweist, welcher um 0,25 mm bis 1,5 mm, insbesondere um bis zu 1,0 mm, und besonders bevorzugt um bis zu 0,75 mm größer ist als der kleinsten Wert der Tiefe der Querrille im Bereich der Deckfläche der Grundanhebung. Diese Maßnahme trägt ebenfalls zu einer vorteilhaften Balance zwischen dem Entwässerungsverhalten und den Bremseigenschaften bei.

Gemäß einer weiteren bevorzugten Ausführung ist die Grundanhebung seitlich durch zwei ebene Seitenflächen begrenzt, welche, im in Draufsicht senkrecht zur Erstreckungsrichtung der Seitenflächen ausgerichteten Querschnitt betrachtet, zur radialen Richtung unter einem Winkel von 0° bis 10°, insbesondere von 2° bis 6° verlaufen, wobei die Seitenflächen bei einem von 0° abweichenden Winkel derart geneigt sind, dass sich die Seitenflächen in Richtung zur Deckfläche einander annähern. Solche Seitenflächen verbessern die abstützende Wirkung der Grundanhebung auf die Profilblöcke. Die vorgesehene Neigung der Seitenflächen bei einem von 0° abweichenden Winkel trägt dazu bei, dass in der Querrille aufgenommenes Wasser auf einfache Weise über die Grundanhebungen hinwegströmen kann und ist somit für das Entwässerungsverhalten von Vorteil.

Gemäß einer weiteren bevorzugten Ausführung beträgt der spitze Winkel, unter welchem die Deckfläche der Grundanhebung relativ zur Laufstreifenperipherie geneigt ist, 3° bis 15°, insbesondere bis zu 10°.

Eine weitere bevorzugte Ausführung ist dadurch gekennzeichnet, dass neben der Grundanhebung in der Querrille zumindest ein Paar, insbesondere zumindest zwei Paare, von keilförmigen Vorsprüngen ausgebildet ist bzw. sind, wobei der eine zu einem Paar gehörende keilförmige Vorsprung an der einen Rillenflanke und der zum selben Paar gehörende zweite keilförmige Vorsprung an der anderen Rillenflanke angebunden ist, wobei die zu einem Paar gehörenden keilförmigen Vorsprünge vor der Rillenmittellinie der Querrille enden. Beim Fahren auf schneebedeckter Fahrbahn begünstigen die Vorsprünge das Ansammeln und Verdichten von Schnee in der Querrille, wobei sie in dieser Hinsicht mit der Grundanhebung besonders vorteilhaft zusammenwirken, und derart die Schneetraktion verbessern helfen.

Bei der letztgenannten bevorzugten Ausführung ist es günstig, wenn jeder keilförmige Vorsprung ein kleineres Volumen als die Grundanhebung aufweist, sodass die Vorsprünge das Rillenvolumen nur geringfügig verringern und somit das Entwässerungsverhalten der Querrille kaum beeinflussen.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 eine Draufsicht auf einen Umfangsabschnitt eines schulterseitigen Bereiches eines Laufstreifens eines Fahrzeugluftreifens mit einer Ausführungsvariante der Erfindung,
Fig. 2 einen Schnitt entlang der Linie II-II in Fig. 1,
Fig. 3 eine vergrößerte Draufsicht auf das Detail Z₃ in Fig. 1,
Fig. 4 einen Schnitt entlang der Linie IV-IV in Fig. 3,
Fig. 5 eine weiter vergrößerte Draufsicht auf das Detail Zs in Fig. 1,
Fig. 6 einen Schnitt entlang der Linie VI-VI in Fig. 5,
Fig. 7 einen Schnitt entlang der Linie VII-VII in Fig. 5,
Fig. 8 eine weiter vergrößerte Draufsicht auf das Detail Z₈ in Fig. 1,
Fig. 9 einen Schnitt entlang der Linie IX-IX in Fig. 8 und
Fig. 10 eine Ansicht gemäß der in Fig. 3 durch den Pfeil S₁₀ angedeuteten Sichtrichtung.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t), wobei die Reifen insbesondere zum Fahren unter winterlichen Fahrbedingungen vorgesehen sind.

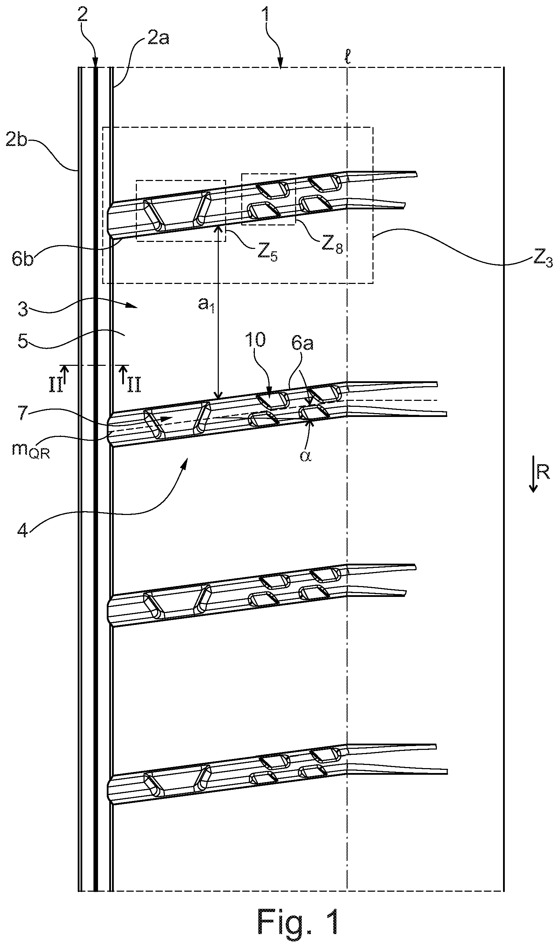

Fig. 1 zeigt eine Draufsicht auf einen Umfangsabschnitt einer zu einem Laufstreifen eines Fahrzeugluftreifens gehörenden, in Umfangsrichtung umlaufenden schulterseitigen Profilblockreihe 1. Der seitliche Rand der Bodenaufstandsfläche (ermittelt mit einem auf einer Normfelge montierten Reifen, Last bei 70 % der maximalen Tragfähigkeit, Innendruck 85 % des Normdruckes, gemäß ETRTO-Standards) ist durch eine gestrichelte Linie I gekennzeichnet. Der Laufstreifen weist eine laufrichtungsgebundene Profilierung auf und ist derart am Fahrzeug zu montieren, dass er die durch den Pfeil R angedeutete Abrollrichtung bei Vorwärtsfahrt aufweist. Der nicht gezeigte Bereich des Laufstreifens kann in bekannter Weise gestaltet sein. Bevorzugter Weise ist in der nicht gezeigten, zweiten Laufstreifenschulter eine weitere schulterseitige Profilblockreihe 1 vorgesehen und im nicht gezeigten zentralen Laufstreifenbereich sind V-förmig über die Laufstreifenbreite verlaufende Quer- oder Schrägrillen ausgebildet.

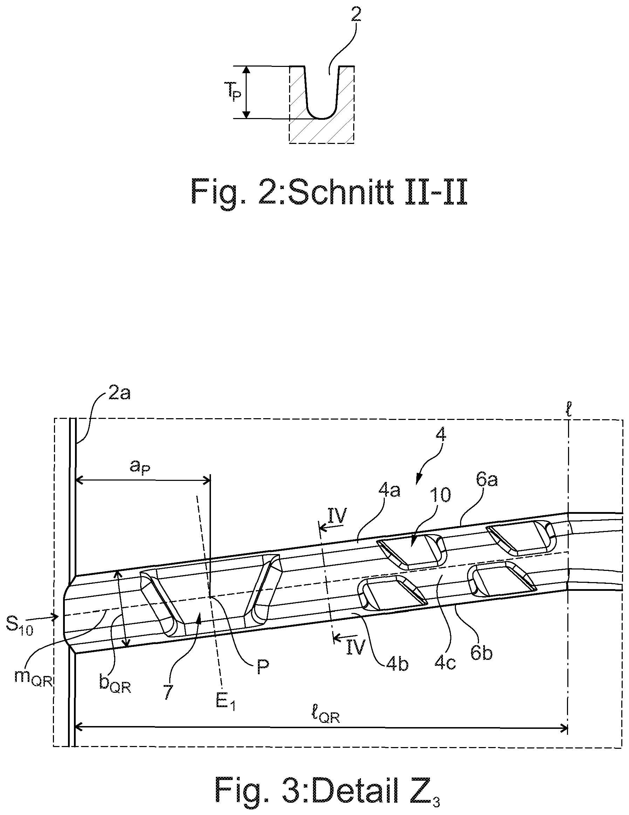

Die schulterseitige Profilblockreihe 1 ist laufstreifeninnenseitig von einer beim gezeigten Ausführungsbeispiel in Draufsicht gerade verlaufenden, schulterseitigen Umfangsrille 2 begrenzt. Die schulterseitige Umfangsrille 2 ist in radialer Richtung auf eine Profiltiefe T_{P} (Fig. 2) ausgeführt ist, welche bei Personenkraftwagen, Vans oder Light-Trucks üblicherweise 6,5 mm bis 10,0 mm beträgt und weist an der Laufstreifenperipherie eine an der schulterseitigen Profilblockreihe 1 ausgebildete, in Draufsicht gerade verlaufende, laufstreifenaußenseitige Rillenkante 2a und eine in Draufsicht gerade verlaufende, laufstreifeninnenseitige Rillenkante 2b auf.

Die schulterseitige Profilblockreihe 1 weist eine Vielzahl von in Umfangsrichtung aufeinanderfolgenden, schulterseitigen Profilblöcken 3 auf, welche durch in Draufsicht vorzugsweise parallel zueinander verlaufende, in die schulterseitige Umfangsrille 2 einmündende und über den seitlichen Rand der Bodenaufstandsfläche (Linie I) hinausverlaufende Querrillen 4 voneinander getrennt sind.

Jeder schulterseitige Profilblock 3 weist an der Laufstreifenperipherie eine Blockaußenfläche 5, an der einen an ihn angrenzenden Querrille 4 eine Blockkante 6a und an der anderen an ihn angrenzenden Querrille 4 eine Blockkante 6b auf, wobei beim Abrollen des Reifens bei Vorwärtsfahrt (Pfeil R) die Blockkante 6a vor der Blockkante 6b in den Untergrund eintritt. Die Blockkante 6a wird nachfolgend als "einlaufende Blockkante 6a" und die Blockkante 6b wird nachfolgend als "auslaufende Blockkante 6b" bezeichnet.

Die Querrillen 4 weisen jeweils eine in Draufsicht dem Rillenverlauf folgende Rillenmittellinien m_{QR} auf und verlaufen - in Draufsicht betrachtet und bezogen auf die Rillenmittellinien m_{QR} - innerhalb der Bodenaufstandsfläche gerade sowie zur axialen Richtung unter einem Winkel α von 0° bis 25°, insbesondere von 5° bis 20°. In Umfangsrichtung unmittelbar aufeinanderfolgende Querrillen 4 sind - bezogen auf die zueinander nächstliegenden Blockkanten 6a, 6b - unter in Umfangsrichtung ermittelten gegenseitigen Abstände a₁ von vorzugsweise 20,0 mm bis 35,0 mm ausgebildet.

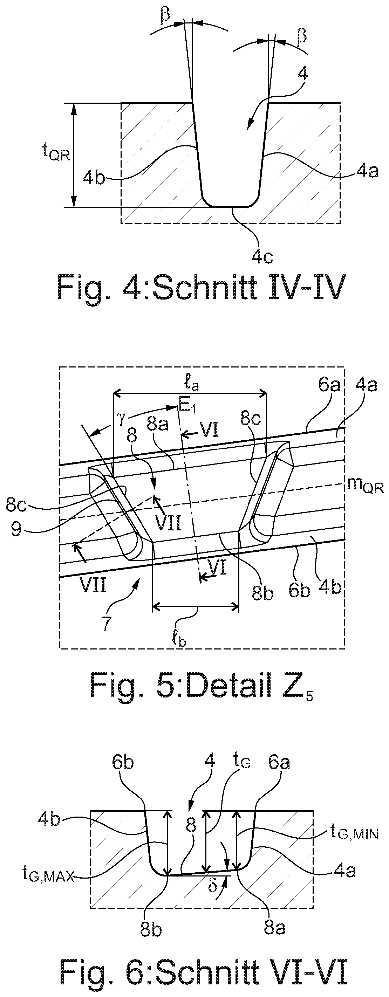

Gemäß Fig. 3 ist jede Querrille 4 durch eine von der einlaufenden Blockkante 6a ausgehende Rillenflanke 4a, eine von der auslaufenden Blockkante 6b ausgehende Rillenflanke 4b und einen Rillengrund 4c begrenzt. Ferner weist jede Querrille 4 eine senkrecht zu den sowie zwischen den Blockkanten 6a, 6b gemessene Breite b_{QR} von 3,0 mm bis 7,0 mm und - jeweils innerhalb der Bodenaufstandsfläche - eine an der Laufstreifenperipherie ermittelte, auf die Rillenmittellinie m_{QR} bezogene, in die axiale Richtung projizierte Länge I_{QR} sowie eine in radialer Richtung ermittelte maximale Tiefe t_{QR} (Fig. 4) von 70% bis 100%, insbesondere von bis zu 95%, der Profiltiefe T_{P} (Fig. 2) der schulterseitigen Umfangsrille 2 auf. Gemäß Fig. 4 ist der Rillengrund 4c, im Querschnitt senkrecht zur Rillenmittellinie m_{QR} betrachtet, flach U-förmig gerundet ausgeführt und die Rillenflanken 4a, 4b verlaufen, im Querschnitt senkrecht zur Rillenmittellinie m_{QR} betrachtet, zur radialen Richtung jeweils unter einem Winkel β von 0° bis 10°, insbesondere von 4° bis 8°.

Wie Fig. 1 ferner zeigt, ist in jeder schulterseitigen Querrille 4 innerhalb der Bodenaufstandsfläche jeweils eine zur schulterseitigen Umfangsrille 2 beabstandete, am Rillengrund 4c (Fig. 3) aufsitzende, zu den Rillenflanken 4a, 4b (Fig. 3) reichende und die Tiefe der Querrille 4 lokal verringernde Grundanhebung 7 ausgebildet.

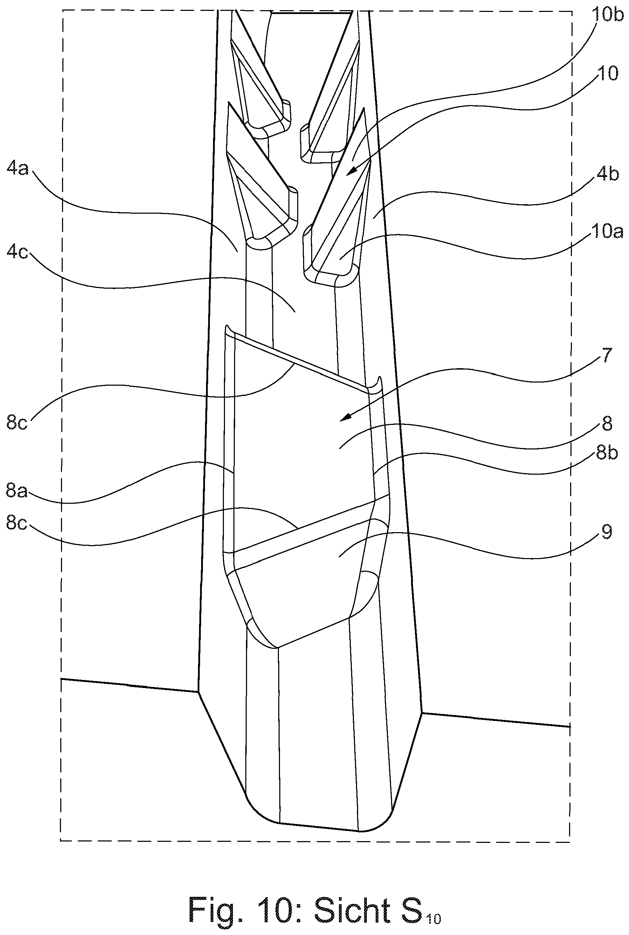

Gemäß Fig. 5 weist die Grundanhebung 7 eine Symmetrieebene E₁ auf, welche von einer in radialer Richtung verlaufenden ersten Geraden (nicht gezeigt) und einer in Draufsicht senkrecht zur Rillenmittellinie m_{QR} verlaufenden zweiten Geraden aufgespannt ist, wobei die Grundanhebung 7 - wie insbesondere in Kombination mit Fig. 10 zu erkennen ist - in radialer Richtung durch eine gleichschenkelig-trapezförmige, ebene Deckfläche 8 und seitlich durch zwei ebene Seitenflächen 9 begrenzt ist. Wie Fig. 3 zeigt, weisen die Symmetrieebene E₁ und die Rillenmittellinie m_{QR} in Draufsicht miteinander einen Schnittpunkt P auf, welcher von der laufstreifenaußenseitigen Rillenkante 2a - ermittelt an der Laufstreifenperipherie - einen in die axiale Richtung projizierten Abstand a_{P} von 15% bis 35%, insbesondere von 20% bis 30%, der erwähnten Länge I_{QR} der Querrille 4 aufweist.

Wie Fig. 5 und Fig. 10 insbesondere in Kombination zeigen, ist die Deckfläche 8 durch eine die Symmetrieebene E₁ (Fig. 5) passierende längere Grundseite 8a, eine die Symmetrieebene E₁ (Fig. 5) passierende kürzere Grundseite 8b und zwei zwischen den Grundseiten 8a, 8b verlaufenden Trapezschenkel 8c begrenzt. Gemäß Fig. 5 verlaufen die Grundseiten 8a, 8b in Draufsicht parallel zu den Blockkanten 6a, 6b, wobei die längere Grundseite 8a der von der einlaufenden Blockkante 6a ausgehenden Rillenflanke 4a und die kürzere Grundseite 8b der von der auslaufenden Blockkante 6b ausgehenden Rillenflanke 4b zugewandt ist. Die längere Grundseite 8a weist in Draufsicht eine in die axiale Richtung projizierte Länge Iₐ von 15% bis 35%, insbesondere von 20% bis 30%, der in die axiale Richtung projizierten Länge l_{QR} (Fig. 3) der Querrille 4 auf. Die kürzere Grundseite 8b weist in Draufsicht eine in die axiale Richtung projizierte Länge I_{b} von 40% bis 75%, insbesondere von 45% bis 65%, besonders bevorzugt von 50% bis 55%, der erwähnten Länge Iₐ auf. Die Trapezschenkel 8c verlaufen in Draufsicht relativ zur Symmetrieebene E₁ unter einem Winkel γ von 10° bis 30°, insbesondere von 15° bis 25°. Gemäß Fig. 6 ist die Deckfläche 8, im in Draufsicht senkrecht zur Rillenmittellinie m_{QR} verlaufenden und in radialer Richtung ausgerichteten Querschnitt betrachtet (vergl. Lage der Schnittlinie VI-VI in Fig. 5), derart relativ zur Laufstreifenperipherie unter einem konstanten spitzen Winkel δ von vorzugsweise 3° bis 15°, insbesondere von bis zu 10°, geneigt, dass die Querrille 4 im Bereich der Deckfläche 8 eine von der längeren Grundseite 8a zur kürzeren Grundseite 8b kontinuierlich zunehmende, in radialer Richtung ermittelte Tiefe t_{G} aufweist. Die Tiefe t_{G} weist an der längeren Grundseite 8a einen Wert t_{G,MIN} von 35% bis 55%, insbesondere von 40% bis 50%, der maximalen Tiefe t_{QR} (Fig. 4) der Querrille 4 und an der kürzeren Grundseite 8b einen Wert t_{G,MAX} auf, welcher um 0,25 mm bis 1,5 mm, insbesondere um bis zu 1,0 mm, und besonders bevorzugt um bis zu 0,75 mm größer ist als der Wert t_{G,MIN}.

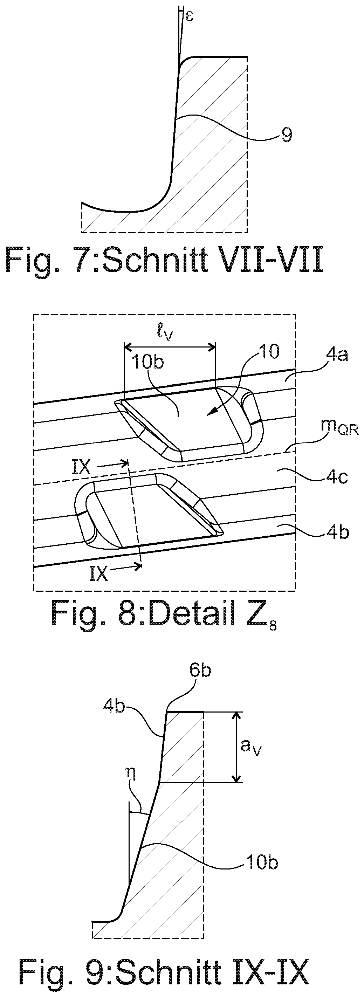

Wie Fig. 5 ferner zeigt, sind die Seitenflächen 9 - in Draufsicht betrachtet und in Analogie zu den Trapezschenkeln 8c der Deckfläche 8 - relativ zur Symmetrieebene E₁ ebenfalls jeweils unter dem erwähnten Winkel γ orientiert und verlaufen - wie Fig. 7 zeigt - im in Draufsicht senkrecht zu den Trapezschenkel 8c ausgerichtet Querschnitt betrachtet (vergl. Lage der Schnittlinie VII-VII in Fig. 5) zur radialen Richtung unter einem Winkel ε von 0° bis 10°, insbesondere von 2° bis 6°, wobei bei einem von 0° abweichenden Winkel ε die Neigung derart ist, dass sich die Seitenflächen 9 in Richtung zur Deckfläche 8 aneinander annähern (siehe Fig. 5).

Wie insbesondere Fig. 5 in Kombination mit Fig. 10 zeigt, sind beim gezeigten Ausführungsbeispiel sämtlich Übergänge im Bereich der Grundanhebung 7 verrundet ausgeführt.

Gemäß Fig. 1 sind beim gezeigten Ausführungsbeispiel in jeder Querrille 3 innerhalb der Bodenaufstandsfläche im Bereich zwischen der Grundanhebung 7 und dem seitlichen Rand der Bodenaufstandsfläche zwei Paare von keilförmigen Vorsprüngen 10 ausgebildet. Wie Fig. 3 zeigt, befindet sich der eine zu einem Paar gehörende keilförmige Vorsprung 10 an der Rillenflanke 4a und der andere zu einem Paar gehörende keilförmige Vorsprung 10 an der Rillenflanke 4b, wobei die zum selben Paar gehörenden keilförmigen Vorsprünge 10 bezüglich der Erstreckungsrichtung der Querrille 4 partiell "überlappen" und wobei jeder keilförmige Vorsprung 10 ein kleineres Volumen als die Grundanhebung 7 aufweist. Gemäß Fig. 8 und Fig. 10 endet jeder keilförmige Vorsprung 10 vor der Rillenmittellinie m_{QR} (Fig. 8) und ist durch zwei dreieckige Seitenflächen 10a (Fig. 10, nur eine Seitenfläche 10a ist zu sehen) und eine zwischen der Rillenflanke 4a bzw. 4b und dem Rillengrund 4c verlaufende, trapezförmige Flankenfläche 10b begrenzt. Gemäß Fig. 9 verläuft die trapezförmige Flankenfläche 10b, im in Draufsicht senkrecht zur Rillenmittellinie m_{QR} verlaufenden und in radialer Richtung ausgerichteten Querschnitt betrachtet (vergl. Lage der Schnittlinie IX-IX in Fig. 8), zur radialen Richtung unter einem Winkel η von 10° bis 20°, endet am Niveau am Rillenflanke 4a, 4b in einem von der Blockkante 6a, 6b in radialer Richtung ermittelten Abstand av von 35% bis 55%, insbesondere von 40% bis 50%, der maximalen Tiefe t_{QR} der Querrille 4 (Fig. 4). Wie Fig. 8 zeigt, weist jeder Vorsprung 10 am an der Rillenflanke 4a bzw. 4b liegenden radial äußeren Ende der trapezförmigen Flankenfläche 10b eine in die axiale Richtung projizierte Länge Iv von 1,0 mm bis 3,0 mm auf.

Die Erfindung ist auf das beschriebene Ausführungsbeispiel nicht beschränkt.

Die Grundanhebungen 7 können auch in mittleren Querrillen, welche Profilblöcke einer mittleren Profilblockreihe voneinander trennen, vorgesehen sein. Es sind Querrillen mit jeweils zumindest einer Grundanhebung 7 vorgesehen, sodass neben den Querrillen mit Grundanhebungen 7 innerhalb der jeweiligen Profilblockreihe auch weitere Querrillen ohne Grundanhebungen 7 ausgebildet sein können. Die Profilblockreihen sind von den Querrillen vorzugsweise durchquert. Neben den Querrillen mit Grundanhebungen 7 können innerhalb der jeweiligen Profilblockreihe weitere Querrillen ohne Grundanhebungen 7 vorgesehen sein. Die Deckfläche 8 der Grundanhebungen 7 kann eine von der trapezförmigen Form abweichende Gestalt aufweisen. Die an der Laufstreifenperipherie ermittelte, in die axiale Richtung projizierte Länge l_{QR} einer Querrille bezieht sich bei Querrillen in mittleren Profilblockreihen auf die gesamte Querrille und bei schulterseitigen Querrillen, wie oben erläutert, auf den innerhalb der Bodenaufstandsfläche befindlichen Teil der Querrillen. Die Vorsprünge 10 sind optional.

### Bezugszeichenliste

- 1: schulterseitige Profilblockreihe
- 2: schulterseitige Umfangsrille
- 2a: laufstreifenaußenseitige Rillenkante
- 2b: laufstreifeninnenseitige Rillenkante
- 3: schulterseitiger Profilblock
- 4: Querrille
- 4a: Rillenflanke
- 4b: Rillenflanke
- 4c: Rillengrund
- 5: Blockaußenfläche
- 6a: einlaufende Blockkante
- 6b: auslaufende Blockkante
- 7: Grundanhebung
- 8: Deckfläche
- 8a: längere Grundseite
- 8b: kürzere Grundseite
- 8c: Trapezschenkel
- 9: Seitenfläche
- 10: keilförmiger Vorsprung
- 10a: Seitenfläche
- 10b: Flankenfläche
- a₁, a_{P}, a_{V}: Abstand
- b_{QR}: Breite
- E₁: Symmetrieebene
- I: Linie (seitlicher Rand der Bodenaufstandsfläche)
- Iₐ, I_{b}, l_{QR}, l_{V}......: Länge
- m_{QR}: Rillenmittellinie
- P: Schnittpunkt
- R: Pfeil (Abrollrichtung)
- S₁₀: Pfeil (Sichtrichtung)
- t_{QR}: maximale Tiefe
- t_{G}: Tiefe
- t_{G,MIN}, t_{G,MAX}: Wert
- t_{QR}: maximale Tiefe
- T_{P}: Profiltiefe
- Z₃, Z₅, Z₈: Detail
- α, β, γ, δ, ε, η: Winkel

## Patentansprüche

1. Fahrzeugluftreifen mit einem laufrichtungsgebunden gestalteten Laufstreifen mit zumindest einer Profilblockreihe (1) mit durch Querrillen (4) voneinander getrennten Profilblöcken (3), welche an den angrenzenden Querrillen (4) jeweils eine beim Abrollen des Reifens bei Vorwärtsfahrt (R) zuerst in den Untergrund eintretende einlaufende Blockkante (6a) und eine auslaufende Blockkante (6b) aufweisen, wobei jede Querrille (4) von den Blockkanten (6a, 6b) ausgehende Rillenflanken (4a, 4b) aufweist und wobei Querrillen (4) vorgesehen sind, in welchen jeweils zumindest eine bis zu beiden Rillenflanken (4a, 4b) reichende Grundanhebung (7) ausgebildet ist, welche in radialer Richtung durch eine im Querschnitt der Querrille (4) relativ zur Laufstreifenperipherie unter einem spitzen Winkel (δ) geneigte Deckfläche (8) begrenzt ist,
**dadurch gekennzeichnet,**
**dass** die Deckfläche (8) der Grundanhebung (7) derart relativ zur Laufstreifenperipherie geneigt ist, dass die Querrille (4) im Bereich der Deckfläche (8) eine von der von der einlaufenden Blockkante (6a) ausgehenden Rillenflanke (4a) zur der von der auslaufenden Blockkante (6b) ausgehenden Rillenflanke (4b) kontinuierlich zunehmende, in radialer Richtung ermittelte Tiefe (t_{G}) aufweist.

2. Fahrzeugluftreifen nach Anspruch 1, **dadurch gekennzeichnet, dass** die Deckfläche (8) die Form eines Trapezes mit einer längeren Grundseite (8a), welche der von der einlaufenden Blockkante (6a) ausgehenden Rillenflanke (4a) zugewandt ist, und einer kürzeren Grundseite (8b), welche der von der auslaufenden Blockkante (6b) ausgehenden Rillenflanke (4b) zugewandten ist, aufweist.

3. Fahrzeugluftreifen nach Anspruch 2, **dadurch gekennzeichnet, dass** die längere Grundseite (8a) und die kürzere Grundseite (8b) jeweils eine in die axiale Richtung projizierte Länge (lₐ, l_{b}) aufweisen, wobei die in die axiale Richtung projizierte Länge (l_{b}) der kürzeren Grundseite (8b) 40% bis 75%, insbesondere 45% bis 65%, besonders bevorzugt 50% bis 55%, der in die axiale Richtung projizierten Länge (lₐ) der längeren Grundseite (8b) beträgt.

4. Fahrzeugluftreifen nach Anspruch 3, **dadurch gekennzeichnet, dass** die in die axiale Richtung projizierte Länge (lₐ) der längeren Grundseite (8a) 15% bis 35%, insbesondere 20% bis 30%, der an der Laufstreifenperipherie ermittelten, in die axiale Richtung projizierten Länge (l_{QR}) der Querrille (4) beträgt.

5. Fahrzeugluftreifen nach einem der Ansprüche 2 bis 4, **dadurch gekennzeichnet, dass** die Deckfläche (8) der Grundanhebung (7) die Form eines gleichschenkeligen Trapezes aufweist.

6. Fahrzeugluftreifen nach einem der Ansprüche 1 bis 5, **dadurch gekennzeichnet, dass** die Grundanhebung (7) eine in radialer Richtung verlaufende Symmetrieebene (E₁) aufweist.

7. Fahrzeugluftreifen nach Anspruch 2 und 6, **dadurch gekennzeichnet, dass** die Deckfläche (8) zwei zwischen der längeren Grundseite (8a) des Trapezes und der kürzeren Grundseite (8b) des Trapezes verlaufende Trapezschenkel (8c) aufweist, welche in Draufsicht relativ zur Symmetrieebene (E₁) der Grundanhebung (7) unter einem Winkel (γ) von 10° bis 30°, insbesondere von 15° bis 25°, verlaufen.

8. Fahrzeugluftreifen nach einem der Ansprüche 1 bis 7, **dadurch gekennzeichnet, dass** die Tiefe (t_{G}) der Querrille (4) im Bereich der Deckfläche (8) der Grundanhebung (7) einen kleinsten Wert (t_{G,MIN}) von 35% bis 55%, insbesondere von 40% bis 50%, der in radialer Richtung ermittelten maximalen Tiefe (t_{QR}) der Querrille (4) aufweist.

9. Fahrzeugluftreifen nach Anspruch 8, **dadurch gekennzeichnet, dass** die Tiefe (t_{G}) der Querrille (4) im Bereich der Deckfläche (8) der Grundanhebung (7) einen größten Wert (t_{G,MAX}) aufweist, welcher um 0,25 mm bis 1,5 mm, insbesondere um bis zu 1,0 mm, und besonders bevorzugt um bis zu 0,75 mm größer ist als der kleinsten Wert (t_{G,MIN}) der Tiefe (t_{G}) der Querrille (4) im Bereich der Deckfläche (8) der Grundanhebung (8).

10. Fahrzeugluftreifen nach einem der Ansprüche 1 bis 9, **dadurch**
**gekennzeichnet, dass** die Grundanhebung (7) seitlich durch zwei ebene Seitenflächen (9) begrenzt ist, welche, im in Draufsicht senkrecht zur Erstreckungsrichtung der Seitenflächen (9) ausgerichteten Querschnitt betrachtet, zur radialen Richtung unter einem Winkel (ε) von 0° bis 10°, insbesondere von 2° bis 6° verlaufen, wobei die Seitenflächen (9) bei einem von 0° abweichenden Winkel (ε) derart geneigt sind, dass sich die Seitenflächen (9) in Richtung zur Deckfläche (8) aneinander annähern.

11. Fahrzeugluftreifen nach einem der Ansprüche 1 bis 10, **dadurch**
**gekennzeichnet, dass** der spitze Winkel (δ), unter welchem die Deckfläche (8) der Grundanhebung (7) relativ zur Laufstreifenperipherie geneigt ist, 3° bis 15°, insbesondere bis zu 10°, beträgt.

12. Fahrzeugluftreifen nach einem der Ansprüche 1 bis 11, **dadurch**
**gekennzeichnet, dass** neben der Grundanhebung (7) in der Querrille (3) zumindest ein Paar, insbesondere zumindest zwei Paare, von keilförmigen Vorsprüngen (10) ausgebildet ist bzw. sind, wobei der eine zu einem Paar gehörende keilförmige Vorsprung (10) an der einen Rillenflanke (4a) und der zum selben Paar gehörende zweite keilförmige Vorsprung (10) an der anderen Rillenflanke (4b) angebunden ist, wobei die zu einem Paar gehörenden keilförmigen Vorsprünge (10) vor der Rillenmittellinie (m_{QR}) der Querrille (3) enden.

13. Fahrzeugluftreifen nach Anspruch 12, **dadurch gekennzeichnet, dass** jeder keilförmige Vorsprung (10) ein kleineres Volumen als die Grundanhebung (7) aufweist.

## Claims

1. Pneumatic vehicle tyre with a directional tread having at least one row of profile blocks (1) with profile blocks (3) which are separated from one another by transverse grooves (4) and respectively have at the adjacent transverse grooves (4) a leading block edge (6a), which arrives first at ground level when the tyre is rolling during forward travel (R), and a trailing block edge (6b) , wherein each transverse groove (4) has groove flanks (4a, 4b) extending from the block edges (6a, 6b) and wherein transverse grooves (4) are provided, in which there is respectively formed at least one base elevation (7), which reaches up to both groove flanks (4a, 4b) and is delimited in the radial direction by a top surface (8) which in the cross section of the transverse groove (4) is inclined at an acute angle (δ) relative to the periphery of the tread,
**characterized in that**
the top surface (8) of the base elevation (7) is inclined relative to the periphery of the tread in such a way that the transverse groove (4) has in the region of the top surface (8) a depth (t_{G}) determined in the radial direction that increases continuously from the groove flank (4a) extending from the leading block edge (6a) to the groove flank (4b) extending from the trailing block edge (6b).

2. Pneumatic vehicle tyre according to Claim 1, **characterized in that** the top surface (8) has the form of a trapezoid with a longer base side (8a), which is facing the groove flank (4a) extending from the leading block edge (6a), and a shorter base side (8b), which is facing the groove flank (4b) extending from the trailing block edge (6b).

3. Pneumatic vehicle tyre according to Claim 2, **characterized in that** the longer base side (8a) and the shorter base side (8b) respectively have a length (lₐ, l_{b}) projected in the axial direction, wherein the length (l_{b}) of the shorter base side (8b) projected in the axial direction is 40% to 75%, in particular 45% to 65%, particularly preferably 50% to 55%, of the length (lₐ) of the longer base side (8b) projected in the axial direction.

4. Pneumatic vehicle tyre according to Claim 3, **characterized in that** the length (lₐ) of the longer base side (8a) projected in the axial direction is 15% to 35%, in particular 20% to 30%, of the length (l_{QR}) of the transverse groove (4) projected in the axial direction that is determined at the periphery of the tread.

5. Pneumatic vehicle tyre according to one of Claims 2 to 4, **characterized in that** the top surface (8) of the base elevation (7) has the form of an isosceles trapezoid.

6. Pneumatic vehicle tyre according to one of Claims 1 to 5, **characterized in that** the base elevation (7) has a plane of symmetry (E₁) in the radial direction.

7. Pneumatic vehicle tyre according to Claims 2 and 6, **characterized in that** the top surface (8) has two trapezoid legs (8c) extending between the longer base side (8a) of the trapezoid and the shorter base side (8b) of the trapezoid, which in plan view extend relative to the plane of symmetry (E₁) of the base elevation (7) at an angle (γ) of 10° to 30°, in particular of 15° to 25°.

8. Pneumatic vehicle tyre according to one of Claims 1 to 7, **characterized in that** the depth (t_{G}) of the transverse groove (4) in the region of the top surface (8) of the base elevation (7) has a smallest value (t_{G,MIN}) of 35% to 55%, in particular of 40% to 50%, of the maximum depth (t_{QR}) of the transverse groove (4) determined in the radial direction.

9. Pneumatic vehicle tyre according to Claim 8, **characterized in that** the depth (t_{G}) of the transverse groove (4) in the region of the top surface (8) of the base elevation (7) has a greatest value (t_{G,MAX}) which is greater by 0.25 mm to 1.5 mm, in particular by up to 1.0 mm, and particularly preferably by up to 0.75 mm, than the smallest value (t_{G,MIN}) of the depth (t_{G}) of the transverse groove (4) in the region of the top surface (8) of the base elevation (8).

10. Pneumatic vehicle tyre according to one of Claims 1 to 9, **characterized in that** the base elevation (7) is laterally delimited by two planar side surfaces (9), which, when considered in the cross section which in plan view is aligned perpendicularly to the direction of extent of the side surfaces (9), extend in relation to the radial direction at an angle (ε) of 0° to 10°, in particular of 2° to 6°, wherein, when at an angle (ε) other than 0°, the side surfaces (9) are inclined in such a way that the side surfaces (9) converge in the direction of the top surface (8).

11. Pneumatic vehicle tyre according to one of Claims 1 to 10, **characterized in that** the acute angle (δ) at which the top surface (8) of the base elevation (7) is inclined relative to the periphery of the tread is 3° to 15°, in particular up to 10°.

12. Pneumatic vehicle tyre according to one of Claims 1 to 11, **characterized in that**, in addition to the base elevation (7), formed in the transverse groove (3) there is or are at least one pair, in particular at least two pairs, of wedge-shaped projections (10), wherein the one wedge-shaped projection (10) belonging to one pair is attached to one groove flank (4a) and the second wedge-shaped projection (10) belonging to the same pair is attached to the other groove flank (4b), wherein the wedge-shaped projections (10) belonging to a pair end before the groove centreline (m_{QR}) of the transverse groove (3).

13. Pneumatic vehicle tyre according to Claim 12, **characterized in that** each wedge-shaped projection (10) has a smaller volume than the base elevation (7).

## Revendications

1. Pneumatique de véhicule comprenant une bande de roulement directionnelle ayant au moins une rangée (1) de blocs de bande de roulement pourvue de blocs (3) de bande de roulement qui sont séparés les uns des autres par des rainures transversales (4) et qui ont sur chacune des rainures transversales (4) adjacentes un bord (6a) de bloc pénétrant, qui pénètre dans la surface sous-jacente d'abord à mesure que le pneumatique roule vers l'avant (R) et un bord (6b) de bloc sortant, chaque rainure transversale (4) ayant des parois (4a, 4b) de rainure s'étendant depuis les bords (6a, 6b) de bloc, et des rainures transversales (4) étant ménagées, dans chacune desquelles au moins une partie en relief (7) de base est formée, laquelle atteint jusqu'à deux parois (4a, 4b) de rainure et est délimitée dans le sens radial par une surface de recouvrement (8) inclinée selon un angle aigu (δ) par rapport à la périphérie de la bande de roulement dans la section transversale de la rainure transversale (4),
**caractérisé en ce que**
la surface de recouvrement (8) de la partie en relief (7) de base est inclinée par rapport à la périphérie de la bande de roulement de telle sorte que la rainure transversale (4) présente, dans la zone de la surface de recouvrement (8), une profondeur (t_{G}), déterminée dans le sens radial, qui augmente en continu à partir de la paroi (4a) de rainure s'étendant depuis le bord (6a) de bloc pénétrant jusqu'à la paroi (4b) de rainure s'étendant depuis le bord (6b) de bloc sortant.

2. Pneumatique de véhicule selon la revendication 1, **caractérisé en ce que** la surface de recouvrement (8) présente la forme d'un trapèze ayant un côté de base plus long (8a), lequel est tourné vers la paroi (4a) de rainure s'étendant depuis le bord (6a) de bloc pénétrant, et un côté de base plus court (8b), lequel est tourné vers la paroi (4b) de rainure s'étendant depuis le bord (6b) de bloc sortant.

3. Pneumatique de véhicule selon la revendication 2, **caractérisé en ce que** le côté de base plus long (8a) et le côté de base plus court (8b) présentent respectivement une longueur (lₐ, l_{b}) projetée dans la direction axiale, la longueur (l_{b}) projetée dans la direction axiale du côté de base plus court (8b) étant de 40 % à 75 %, en particulier de 45 % à 65 %, plus préférentiellement de 50 % à 55 %, de la longueur (lₐ) projetée dans la direction axiale du côté de base plus long (8a).

4. Pneumatique de véhicule selon la revendication 3, **caractérisé en ce que** la longueur (lₐ) projetée dans la direction axiale du côté de base plus long (8a) est de 15 % à 35 %, en particulier de 20 % à 30 %, de la longueur (l_{QR}) projetée dans la direction axiale de la rainure transversale (4) déterminée sur la périphérie de la bande de roulement.

5. Pneumatique de véhicule selon l'une des revendications 2 à 4, **caractérisé en ce que** la surface de recouvrement (8) de la partie en relief (7) de base présente la forme d'un trapèze isocèle.

6. Pneumatique de véhicule selon l'une des revendications 1 à 5, **caractérisé en ce que** la partie en relief (7) de base présente un plan de symétrie (E₁) s'étendant dans le sens radial.

7. Pneumatique de véhicule selon les revendications 2 et 6, **caractérisé en ce que** la surface de recouvrement (8) présente deux côtés (8c) de trapèze s'étendant entre le côté de base plus long (8a) du trapèze et le côté de base plus court (8b) du trapèze, lesquels, en vue en plan, s'étendent par rapport au plan de symétrie (E₁) de la partie en relief (7) de base selon un angle (γ) de 10° à 30°, en particulier de 15° à 25°.

8. Pneumatique de véhicule selon l'une des revendications 1 à 7, **caractérisé en ce que** la profondeur (t_{G}) de la rainure transversale (4) dans la zone de la surface de recouvrement (8) de la partie en relief (7) de base présente une valeur la plus petite (t_{G,MIN}) de 35 % à 55 %, en particulier de 40 % à 50 %, de la profondeur maximale (t_{QR}) de la rainure transversale (4) déterminée dans le sens radial.

9. Pneumatique de véhicule selon la revendication 8, **caractérisé en ce que** la profondeur (t_{G}) de la rainure transversale (4) dans la zone de la surface de recouvrement (8) de la partie en relief (7) de base présente une valeur la plus grande (t_{G,MAX}), laquelle est supérieure de 0,25 mm à 1,5 mm, en particulier d'au plus 1,0 mm, et plus préférentiellement d'au plus 0,75 mm, à la valeur la plus petite (t_{G,MIN}) de la profondeur (t_{G}) de la rainure transversale (4) dans la zone de la surface de recouvrement (8) de la partie en relief (8) de base.

10. Pneumatique de véhicule selon l'une des revendications 1 à 9, **caractérisé en ce que** la partie en relief (7) de base est délimitée latéralement par deux surfaces latérales planes (9), lesquelles, considérées dans la section transversale orientée en vue en plan perpendiculairement à la direction d'extension des surfaces latérales (9), s'étendent par rapport à la direction radiale selon un angle (ε) de 0° à 10°, en particulier de 2° à 6°, les surfaces latérales (9) étant inclinées selon un angle (ε) différent de 0° de telle sorte que les surfaces latérales (9) se rapprochent l'une de l'autre en direction de la surface de recouvrement (8).

11. Pneumatique de véhicule selon l'une des revendications 1 à 10, **caractérisé en ce que** l'angle aigu (δ), sous lequel la surface de recouvrement (8) de la partie en relief (7) de base est inclinée par rapport à la périphérie de la bande de roulement, est de 3° à 15°, en particulier d'au plus 10°.

12. Pneumatique de véhicule selon l'une des revendications 1 à 11, **caractérisé en ce qu'**à côté de la partie en relief (7) de base, sont formées dans la rainure transversale (3) au moins une paire, en particulier au moins deux paires, de saillies (10) en forme de coin, l'une des saillies (10) en forme de coin qui appartient à une paire étant raccordée à l'une des parois (4a) de rainure et la seconde saillie (10) en forme de coin qui appartient à la même paire étant raccordée à l'autre paroi (4b) de rainure, les saillies (10) en forme de coin qui appartiennent à une paire se terminant avant la ligne médiane (m_{QR}) de la rainure transversale (3).

13. Pneumatique de véhicule selon la revendication 12, **caractérisé en ce que** chaque saillie (10) en forme de coin présente un volume plus petit que la partie en relief (7) de base.
